(19) Europäisches Patentamt
European Patent Office
Office européen des brevets

(11) **EP 3 793 146 A1**

(12) **EUROPEAN PATENT APPLICATION**
published in accordance with Art. 153(4) EPC

(43) Date of publication:
**17.03.2021 Bulletin 2021/11**

(21) Application number: **18867298.4**

(22) Date of filing: **09.05.2018**

(51) Int Cl.:
**H04L 25/02** (2006.01)   **F24F 11/88** (2018.01)

(86) International application number:
**PCT/JP2018/017938**

(87) International publication number:
**WO 2019/215843 (14.11.2019 Gazette 2019/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hitachi-Johnson Controls Air
Conditioning, Inc.
Tokyo 105-0022 (JP)**

(72) Inventors:
• **SUGIYAMA, Yoshikazu
Chiyoda-ku,
Tokyo 1008280 (JP)**

• **MACHIDA, Yoshihiro
Chiyoda-ku,
Tokyo 1008280 (JP)**
• **YAMAMOTO, Yuji
Minato-ku,
Tokyo 1050022 (JP)**
• **SAITO, Shinya
Minato-ku,
Tokyo 1050022 (JP)**

(74) Representative: **MERH-IP Matias Erny Reichl
Hoffmann
Patentanwälte PartG mbB
Paul-Heyse-Strasse 29
80336 München (DE)**

(54) **AIR CONDITIONER SYSTEM**

(57) Provided is the technique of realizing high-speed data transmission in communication among many outdoor and indoor devices connected to a free communication network topology.

An indoor device 10a has a communication cable terminal 18a connected to a communication cable 31 connected to an indoor device 10b, a communication cable terminal 18b connected to the communication cable 31 connected to an indoor device 10c, a transmission path switch 13a connected to the communication cable terminal 18a, a transmission path switch 13b connected to the communication cable terminal 18b, and an inductor 11 connected to between the transmission path switch 13a and the transmission path switch 13b. Each indoor controller 15 switches the transmission path switch 13a and the transmission path switch 13b between a state in which the communication cable terminal 18a and the communication cable terminal 18b are short-circuited and a state in which the communication cable terminal 18a and the communication cable terminal 18b are connected to each other via the delay element 11.

FIG. 1

**Description**

TECHNICAL FIELD

The present invention relates to an air conditioning system configured such that wiring is made among devices and control is made via communication.

BACKGROUND ART

Typically, a communication network of an air conditioning system is mainly for transmitting a small amount of information as an operation state or a control command for outdoor and indoor devices, and therefore, is at a lower speed as compared to the Ethernet such as 100BASE-T and optical fiber communication. Moreover, such a communication network needs a long inter-device distance and a great amount of wiring. For this reason, a cost has been reduced not by a modulated carrier method using a high-frequency cable such as a coaxial cable but by a baseband transmission method.

Meanwhile, high functionality of an equipment instrument and diversification of transmission information have been recently made, and a response to high-speed serial data transmission has been demanded.

It has been known that when serial data transmission is speeded up, waveform distortion or jitter due to reflection influences communication quality, and a technique against the jitter is described in Patent Document 1.

Moreover, the air conditioning system emphasizes workability in construction at a building or a store and a work efficiency, and therefore, a free communication network topology with chain wiring and start branch wiring has been employed. A communication cable distance of up to about 1000 m can be used.

In such a situation, the technique of optimizing a resistance value for terminating a communication cable is described in Patent Document 2.

CITATION LIST

PATENT DOCUMENT

Patent Document 1: JP-A-2008-54100
Patent Document 2: JP-A-6-38278

SUMMARY OF THE INVENTION

PROBLEMS TO BE SOLVED BY THE INVENTION

Typically, the free communication network topology with chain wiring and star branch wiring has been employed, and the number of devices connected to the communication network is equal to or greater than 200. For this reason, it is difficult to calculate signal reflection in advance.

Moreover, there are problems that a communication data amount increases due to complication and multi-functionalization of the air conditioning system and network congestion occurs due to access concentration on the communication network.

In response, when an attempt is made to speed up a data transmission speed, there is tradeoff in a relationship between the data transmission speed and a communication cable length not resulting in reflection. In the case of maintaining the communication cable length, there are limitations on speed-up of the data transmission speed.

For these reasons, the present invention is intended to provide the technique of realizing high-speed data transmission in communication among many outdoor and indoor devices connected to a free communication network topology.

SOLUTIONS TO THE PROBLEMS

For solving the above-described problems, an air conditioning system according to one embodiment of the present invention includes an air conditioner configured such that an outdoor device having an outdoor controller and multiple indoor devices having indoor controllers are connected to each other via a transmission line and operation control is performed by serial data communication via the transmission line. Any one of the outdoor device and the multiple indoor devices has a terminator configured to perform impedance termination for the transmission line. Each indoor device includes a first transmission line terminal connected to the transmission line connected to other indoor devices or the outdoor device, a second transmission line terminal connected to the transmission line connected to still other indoor devices, a first transmission path switch connected to the first transmission line terminal, a second transmission path switch connected to the second transmission line terminal, and a delay element connected to between the first transmission path switch and the second transmission path switch. Each indoor controller switches the first transmission path switch and the second transmission path switch between an initial state in which the first transmission line terminal and the second transmission line terminal are short-circuited and a state in which the first transmission line terminal and the second transmission line terminal are connected to each other via the delay element.

EFFECTS OF THE INVENTION

According to the present invention, high-speed data transmission in communication among many outdoor and indoor devices connected to the free communication network topology can be realized.

BRIEF DESCRIPTION OF THE DRAWINGS

Fig. 1 is a diagram of a communication system of an air conditioning system according to a first embodiment of the present invention.
Fig. 2 is a diagram of a communication network of the air conditioning system according to the first embodiment.
Fig. 3 is a graph of differential signals between communication cable terminals according to the first embodiment.
Fig. 4 is a graph of differential signals between the communication cable terminals according to the first embodiment, the graph illustrating a state in which zero crossing has been eliminated by the control of inserting inductors.
Fig. 5 is a chart of a communication sequence of an outdoor device and multiple indoor devices in a construction setting mode of the air conditioning system according to the first embodiment.
Fig. 6 is a diagram of a communication network of an air conditioning system according to a second embodiment.
Fig. 7 is a chart of a communication sequence of outdoor devices and indoor devices in a construction setting mode of the air conditioning system according to the second embodiment.
Fig. 8 is a diagram of one example of a communication control frame for the outdoor and indoor devices.

DESCRIPTION OF EMBODIMENTS

[First Embodiment]

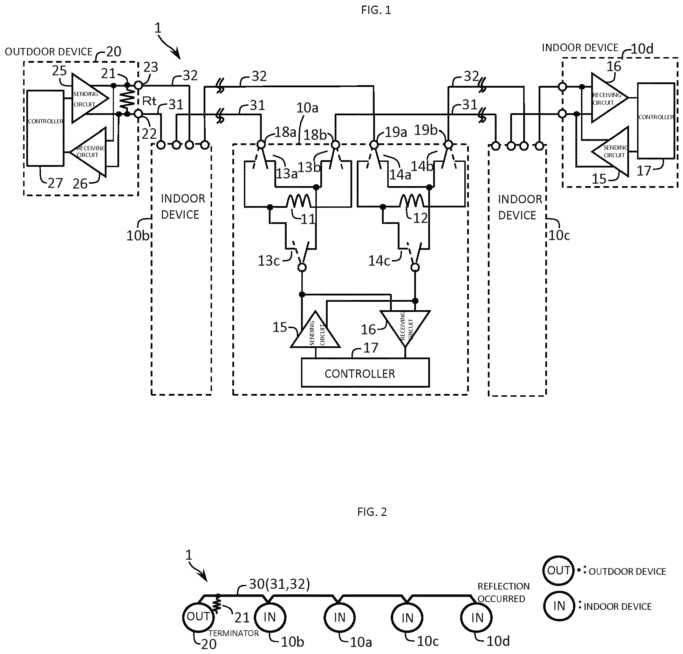

Fig. 1 is a diagram of a communication system of an air conditioning system 1 according to a first embodiment of the present invention.
The air conditioning system 1 includes an air conditioner having indoor devices 10a, 10b, 10c, 10d, an outdoor device 20, and communication cables 31, 32. Vinyl-coated two-core cables or twisted pair cables are used as the communication cables 31, 32 for performing serial data transmission with a differential signal. The indoor devices 10a, 10b, 10c, 10d and the outdoor device 20 are in chain connection (also called "transition wiring") allowing sending/receiving of the same signal via the communication cables 31, 32, and employ a so-called serial bus method. The communication cables 31, 32 are equivalent to transmission lines.
The indoor device 10a has inductors 11, 12, communication cable terminals 18a, 18b, transmission path switches 13a, 13b, 13c, communication cable terminals 19a, 19b, communication cable terminals 14a, 14b, 14c, a sending circuit 15, a receiving circuit 16, and a controller 17. Other indoor devices 10b, 10c, 10d are similarly configured. The controller 17 is equivalent to an indoor controller. The communication cable terminals 18a, 19a are equivalent to first transmission line terminals, and the communication cable terminals 18b, 19b are equivalent to second transmission line terminals. The transmission path switches 13a, 14a are equivalent to first transmission path switches, and the transmission path switches 13b, 14b are equivalent to second transmission path switches.
The communication cable terminals 18a, 18b are paired. A signal input from the communication cable terminal 18a is output to the adjacent indoor device 10c via the communication cable terminal 18b, and a signal input from the communication cable terminal 18b is output to the adjacent indoor device 10b via the communication cable terminal 18a. Similarly, the communication cable terminals 19a, 19b are paired. A signal input from the communication cable terminal 19a is output to the adjacent indoor device 10c via the communication cable terminal 19b, and a signal input from the communication cable terminal 19b is output to the adjacent indoor device 10b via the communication cable terminal 19a.
The transmission path switches 13a, 13b, 13c are switches connected to a side close to the communication cable terminals 18a, 18b and configured to open/close in association with each other. In Fig. 1, it is configured to be switchable between a state indicated by a solid line and a state indicated by a dashed line. The transmission path switches 14a, 14b, 14c are switches connected to a side close to the communication cable terminals 19a, 19b and configured to open/close in association with each other. In Fig. 1, it is configured to be switchable between a state indicated by a solid line and a state indicated by a dashed line.

The sending circuit 15 is configured to encode sending data from the controller 17 into a signal, thereby sending the signal to the outside. The receiving circuit 16 has a differential receiving device, and is configured to decode the received signal to input, as reception data, the resultant signal to the controller 17. The controller 17 is configured to send/receive data via the sending circuit 15 and the receiving circuit 16 and switch the transmission path switches 13a, 13b, 13c and the transmission path switches 14a, 14b, 14c.

The outdoor device 20 includes a terminator 21, communication cable terminals 22, 23, a sending circuit 25, a receiving circuit 26, and a controller 27. The controller 27 is equivalent to an outdoor controller.

One of the communication cables 31, 32 is connected to the communication cable terminal 21 of the outdoor device 20, and the other one of the communication cables 31, 32 is connected to the communication cable terminal 23. The communication cable 31 connected to the communication cable terminal 22 is connected to the communication cable terminal 18a of the indoor device 10a, and the communication cable 32 connected to the communication cable terminal 23 is connected to the communication cable terminal 19a of the indoor device 10.

The transmission path switch 13a is, in an initial state, in a state in which the communication cable terminals 18a, 18b are short-circuited, and the same also applies to the transmission path switches 14a, 14b. In this initial state, sending signals from the communication cable terminals 22, 23 of the outdoor device 20 are input from the communication cable terminal 18a to the receiving circuit 16 by way of the transmission path switch 13c. The same also applies to an input signal from the communication cable terminal 19a.

The indoor device 10a is configured to determine, after power distribution, whether or not the indoor device 10a itself receives signal reflection through a later-described construction setting mode. As a result of determination, in a case where signal reflection is received, the controller 17 switches, as indicated by the dashed line, the transmission path switches 13a, 13b, 13c to an inductor 11 side, and switches, as indicated by the dashed line, the transmission path switches 14a, 14b, 14c to an inductor 12 side.

In this manner, sending signals from the communication cable terminals 22, 23 of the outdoor device 20 are transmitted from the communication cable terminal 18a to the chain-connected indoor device 10c by way of the transmission path switch 13a, the inductor 11, and the transmission path switch 13b. The same also applies to a transmission path switch 14a side. That is, the communication cable terminal 18a and the communication cable terminal 18b are connected to each other via the inductor 11, and the communication cable terminal 19a and the communication cable terminal 19b are connected to each other via the inductor 12.

At the same time, the sending signals from the communication cable terminals 22, 23 are input from the communication cable terminal 18a to the receiving circuit 16 by way of the transmission path switches 13a, 13c. The same also applies to the transmission path switch 14a side.

When the indoor device 10a operates as described above, each of the inductors 11, 12 is inserted into a two-core transmission path connecting the indoor devices to each other.

Next, reflection in serial data transmission and an effect of insertion of the inductors 11, 12 will be described with reference to Fig. 2.

Fig. 2 is a diagram of a communication network of the air conditioning system 1.

As in Fig. 1, the air conditioning system 1 includes the indoor device 20, a communication cable 30 (31, 32), the indoor devices 10a, 10b, 10c, 10d chain-connected via the same communication cable, and only a single terminator 21 connected to such a chain transmission path.

When the outdoor device 20 sends a signal to the indoor device 10a, a traveling wave (a direction from the outdoor device 20 to the indoor device 10a) is reflected on the indoor device 10d. Such a reflective wave (a direction from the indoor device 10d to the indoor device 10c) propagates in the communication cable 30, and the waveform of such a reflective wave is distorted when the phase of the reflective wave becomes opposite to the phase of the traveling wave at the communication cable terminal of the indoor device 10a.

In a case where the delay phase of the reflective wave with respect to that of the traveling wave is the worst, zero crossing which is crossing at a zero level as a determination threshold for decoding a signal occurs, and for this reason, an error in decoding is caused.

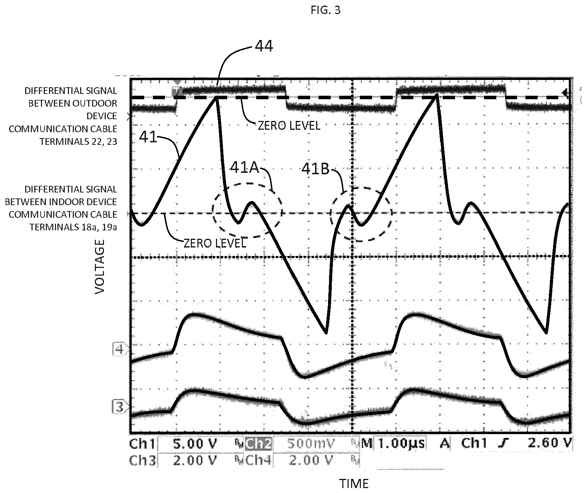

Fig. 3 is a graph of a differential signal between the communication cable terminals 18a, 19a and a differential signal between the communication cable terminals 22, 23.

Fig. 3 illustrates a differential signal 41 between the communication cable terminals 18a, 19a of the indoor device 10 and a differential signal between the communication cable terminals 22, 23 of the outdoor device 20.

The differential signal 44 of the outdoor device 20 crosses a zero level indicated by a dotted line in the figure, and decoding determination of "10" is available.

On the other hand, the differential signal 41 received by the indoor device 10 is greatly distorted, and portions 41A, 41B surrounded by circles cross the zero level at other boundaries than a one-bit boundary. Due to such zero crossing, decoding as "10" is supposed to be made, but decoding as "1010" is erroneously made.

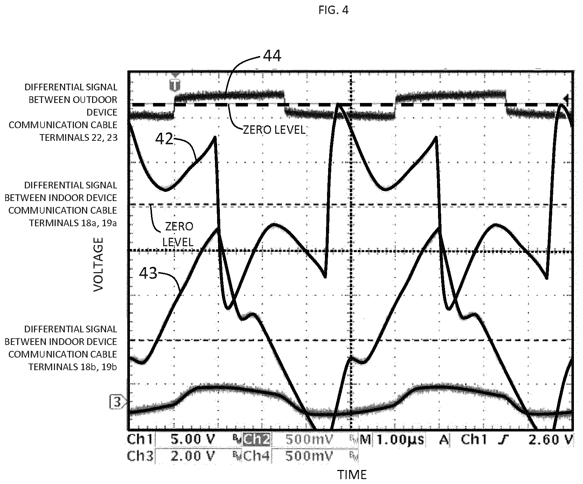

A state in which such an erroneous determination state is eliminated by the control of inserting the inductors 11, 12 into the indoor device 10 is illustrated in Fig. 4.

Fig. 4 illustrates a differential signal between the communication cable terminals 18a, 19a and a differential signal between the communication cable terminals 22, 23, and is a graph in the state in which zero crossing is eliminated by the control of inserting the inductors 11, 12.

Fig. 4 is a graph of a differential signal 42 between the communication cable terminals 18a, 19a of the indoor device 10 and a differential signal 43 between the indoor device communication cable terminals 18b, 19b.

For the differential signal 42, the reflective wave reflected on the indoor device 10d is delayed by the inductor 11, and is added to the traveling wave. Thus, a center is recessed on a positive level, but zero crossing is eliminated.

On the other hand, for the differential signal 43, the traveling wave from the outdoor device 20 is delayed, and is added to the reflective wave reflected on the indoor device 10d. Thus, zero crossing is similarly eliminated.

As described above, in the initial state in which connection to the communication network is made, decoding determination is erroneously made in the indoor device 10a. However, the reflective wave is delayed by the inductors 11, 12, resulting in normal decoding and possible reception.

A relationship between a communication cable length susceptible to reflection and a data signal frequency will be described herein.

For example, in the case of a data signal frequency Fdt = 100 kHz, the communication cable length for avoiding zero crossing due to reflection is equal to or shorter than 570 m. However, in a case where the data signal frequency is speeded up to 200 kHz, a signal cycle is shortened, and therefore, the communication cable length for avoiding zero crossing due to reflection decreases to equal to or shorter than 280 m.

As described above, the data signal frequency and the maximum communication cable length is in a trade-off relationship.

In the present embodiment, reflection influence can be avoided, and therefore, a communication cable of equal to or longer than 280 m can be used even in the case of the data signal frequency Fdt = 200 kHz. Thus, high-speed data transmission in communication among many outdoor and indoor devices connected to a free communication network topology can be realized.

Next, in the air conditioning system 1 of the first embodiment, the construction setting mode after power has been distributed to the indoor device 10 will be described.

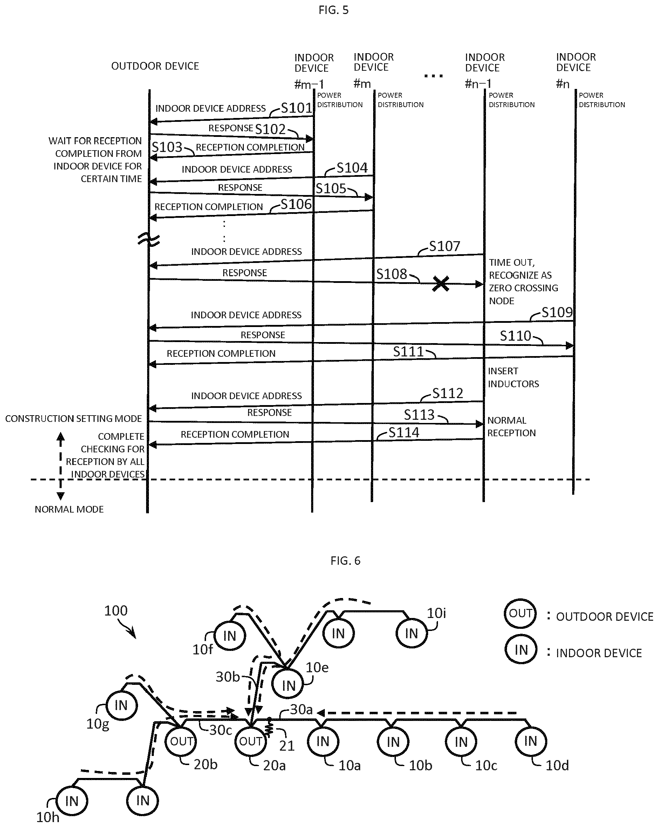

Fig. 5 is a chart of a communication sequence among the outdoor device 20 and indoor devices #m-1 to #n in the construction setting mode.

After power distribution, the outdoor device 20 checks reception of indoor device addresses from all of the indoor devices #m-1 to #n. In power distribution, the indoor devices #m-1 to #n send the indoor device addresses thereof to the outdoor device 20. The indoor device address described herein is a unique number for identifying the indoor device in communication control, and may be an identification code (ID).

The indoor device m-1 to which power has been distributed sends the indoor device address thereof to the outdoor device 20 (S101).

The outdoor device 20 having received the indoor device address of the indoor device m-1 specifies the indoor device #m-1 according to the indoor device address, and sends a response to the indoor device #m-1 (S102).

After having received the response, the indoor device #m-1 sends "reception completion" to the outdoor device 20 (S103), and the outdoor device 20 completes communication network connection registration for the indoor device #m-1.

After power distribution, communication network connection registration for the indoor devices #m to #n is also performed by the outdoor device 20 by a similar sequence (S104 to S106, S109 to S111).

The indoor device #n-1 to which power has been distributed sends the indoor device address thereof to the outdoor device 20 (S107).

The outdoor device 20 sends a response to the indoor device #n-1. However, the indoor device #n-1 is susceptible to zero crossing distortion due to the reflective wave. For this reason, an error in decoding determination is caused, and the indoor device #n-1 cannot receive the response (S108).

Thus, the indoor device #n-1 times out beyond response reception waiting time. Accordingly, the indoor device #n-1 recognizes that the indoor device #n-1 itself is in a zero crossing state due to signal reflection.

Next, the indoor device #n-1 switches the transmission path switches 13a, 13b, 13c and the transmission path switches 14a, 14b, 14c from the initial state (the state indicated by the solid line) to the side close to the inductors 11, 12 (the state indicated by the dashed line).

The indoor device #n-1 sends the indoor device address to the outdoor device 20 again (S112).

The outdoor device 20 sends the response to the indoor device #n-1 (S113).

For the indoor device #n-1, zero crossing has been eliminated by the inductor effect. Thus, normal decoding can be made, and the indoor device #n-1 receives the response (S113).

The indoor device #n-1 sends "reception completion" to the outdoor device (S114), and the outdoor device 20 completes communication network connection registration for the indoor device #n-1.

Such a communication procedure is employed, so that the indoor device unable to perform communication can be sensed from many indoor devices connected to the communication network and the outdoor device 20 can normally communicate with all indoor devices. Thus, high-speed data transmission in communication among many outdoor devices 20 and indoor devices 10a to 10d connected to the free communication network topology can be realized.

When communication network connection registration has been completed for all indoor devices, the outdoor device 20 transitions to a normal operation mode.

Next, the method for determining inductance values of the inductors 11, 12 of the indoor device 10a will be described.

For avoiding a reception signal of the indoor device 10a from zero crossing, the reflective wave may be delayed by $1/4\lambda$ to shift from a positive level of the traveling wave.

A calculation expression for an inductance value Lsht for realizing such a delay is

$$Lsht = 1/(4 \times Fdt) \times Ltm \ldots \text{Expression (1)},$$

where the data signal frequency is Fdt [kHz], and
the inductance value for a delay by unit time is Ltm [$\mu$H/$\mu$sec].

For example, when Fdt = 200kHz and Ltm = 19.3 [$\mu$H/$\mu$sec] are employed as numerical value examples,

$$Lsht = 1/(4 \times 0.2) \times 19.3 = 24.1 \ [\mu H]$$

[Second Embodiment]

Next, an air conditioning system 100 according to a second embodiment of the present invention will be described.

Fig. 6 is a diagram of a communication network of the air conditioning system 100.

Fig. 6 illustrates a state in which outdoor and indoor devices are connected to a free communication network topology with a combination of chain wiring and star branch wiring.

The air conditioning system 100 includes outdoor devices 20a, 20b, indoor devices 10a to 10i, communication cables 30a, 30b, 30c connecting the outdoor device 20a and the indoor devices 10a to 10i to each other, and a terminator 21 connected to the outdoor device 20a. In a case where two outdoor devices 20a, 20b are present on the communication network, the terminator 21 is connected in advance to one of the outdoor devices 20a, 20b. In the air conditioning system 100, the indoor device 20a serves as a refrigerant system for the indoor devices 10a to 10d, 10e, 10f, 10i, and another outdoor device 20b serves as a refrigerant system for the indoor devices 10g, 10h. A configuration of each of the outdoor devices 20a, 20b and a configuration of each of the indoor devices 10a to 10i are similar to those of the outdoor device 20 and the indoor device 10a described in the first embodiment.

Wiring in a section among the outdoor device 20a and the indoor devices 10a to 10d is chain wiring. The outdoor device 20a is branched into three devices, i.e., the indoor device 10a, the indoor device 10e, and the outdoor device 20b, and these devices are in star wiring.

In this communication network topology, a sending signal from the outdoor device 20a is reflected at five spots of the indoor device 10d, the indoor device 10f, the indoor device 10g, the indoor device 10h, and the indoor device 10i. On a transmission path to each device, the indoor device in which a decoding error due to reflection occurs might be present. Thus, a zero crossing sensing method in a construction setting mode is effective.

Moreover, a signal sent from each indoor device to the outdoor device 20a is inevitably received because the terminator 21 is connected to the outdoor device 20a. Such a characteristic is utilized in the construction setting mode to send an indoor device address to the outdoor device 20a.

Next, the construction setting mode after power has been distributed to the indoor device in the air conditioning system 100 will be described.

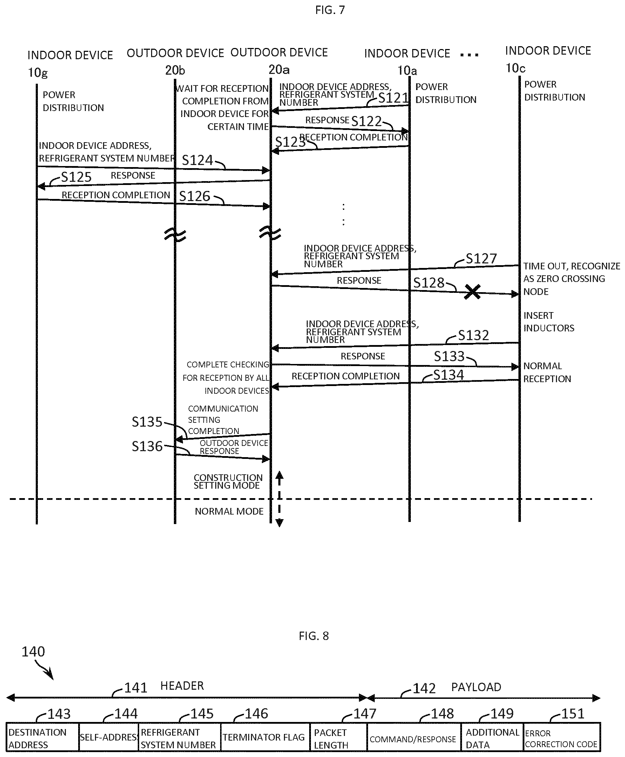

Fig. 7 is a chart of a communication sequence among the outdoor devices 20a, 20b and the indoor devices 10a to 10i in the construction setting mode in the second embodiment.

Fig. 7 only illustrates the communication sequence for the indoor devices 10a, 10c, 10g as the indoor devices, but a similar communication sequence is also performed for other indoor devices than these devices.

After power distribution, the outdoor device 20a checks reception for all of the indoor devices 10a to 10i. When power is distributed, the indoor devices 10a to 10i send the indoor device addresses thereof to the outdoor devices.

The indoor device 10a sends the indoor device address and a refrigerant system number to the outdoor device 20a (S121). The refrigerant system number described herein is an identification code commonly assigned to multiple indoor devices using refrigerant supplied from the same outdoor device. In Fig. 6, the indoor devices 10a, 10b, 10c, 10d, 10e, 10f, 10i have, as one example, the same refrigerant system number for refrigerant supplied from the outdoor device 20a, and the indoor devices 10g, 10h have the same refrigerant system number for refrigerant supplied from the outdoor device 20b.

The outdoor device 20a having received the indoor device address of the indoor device 10a specifies the indoor device 10a according to the indoor device address, and sends a response to the indoor device 10a (S122).

After having received the response, the indoor device 10a sends "reception completion" to the outdoor device 20a (S123), and the outdoor device 20a completes communication network connection registration for the indoor device 10a.

The indoor device 10g whose refrigerant system belongs to the outdoor device 20b sends, to the outdoor device 20a, the indoor device address thereof and the refrigerant system number corresponding to the outdoor device 20b (S124).

The outdoor device 20a having received the indoor device address of the indoor device 10g specifies the indoor device 10g according to the indoor device address, and sends a response to the indoor device 10g (S125).

After having received the response, the indoor device 10g sends "reception completion" to the outdoor device 20a (S126), and the outdoor device 20a completes, in combination with the refrigerant system number for the outdoor device 20b, communication network connection registration for the indoor device 10a.

A communication sequence for the indoor device 10c is similar to that of Fig. 5 of the first embodiment. That is, the indoor device 10c to which power has been distributed sends the indoor device address thereof and the refrigerant system number to the outdoor device 20a (S127), and the outdoor device 20 sends a response to the indoor device 10c. However, the indoor device 10c is susceptible to zero crossing distortion due to a reflective wave. For this reason, an error in decoding determination is caused, and the indoor device 10c cannot receive the response (S128). Thus, the indoor device 10c times out beyond response reception waiting time. Accordingly, the indoor device 10c recognizes that the indoor device 10c itself is in a zero crossing state due to signal reflection.

Next, the indoor device 10c switches transmission path switches 13a, 13b, 13c and transmission path switches 14a, 14b, 14c from an initial state (a state indicated by a solid line) to a side close to inductors 11, 12 (a state indicated by a dashed line).

The indoor device 10c sends the indoor device address to the outdoor device 20 again (S132). The outdoor device 20 sends a response to the indoor device 10c (S133). For the indoor device 10c, zero crossing has been eliminated by an inductor effect. Thus, normal decoding can be made, and the indoor device 10c receives the response (S133).

When receiving "reception completion" from the indoor device 10c (S134), the outdoor device 20a performs communication network connection registration for the indoor device 10c, and completes reception checking for all indoor devices.

Next, the outdoor device 20a sends communication setting completion to the outdoor device 20b (S135). Such communication setting completion includes the indoor device address and the refrigerant system number for, e.g., the indoor device 10g as the refrigerant system for the outdoor device 20b.

When receiving communication setting completion, the outdoor device 20b sends an "outdoor device response" to the outdoor device 20a (S136), and the outdoor device 20b itself transitions to a normal mode to perform normal communication control together with the outdoor device 10g. When receiving the "outdoor device response," the outdoor device 20a transitions from the construction setting mode to the normal mode.

Such a communication procedure is employed, so that the indoor device unable to perform communication can be sensed from many indoor devices connected to the communication network and the outdoor device 20a can normally communicate with all indoor devices.

[Third Embodiment]

Next, an air conditioning system according to a third embodiment of the present invention will be described.

In the above-described embodiments, the terminator 21 is connected to the outdoor device 20 or the outdoor device 20a, but may be connected to an optional one of outdoor and indoor devices connected to a communication network. In this case, the outdoor or indoor device connected to the terminator 21 needs to be recognized by the remaining outdoor and indoor devices. After the remaining outdoor and indoor devices have recognized the outdoor or indoor device connected to the terminator 21, a communication sequence similar to the communication sequence described with reference to Fig. 5 or 7 is performed among the outdoor or indoor device connected to the terminator 21 and the remaining outdoor and indoor devices, and the presence or absence of zero crossing is sensed.

In the present embodiment, each outdoor device or each indoor device broadcasts, after power distribution, whether or not the terminator 21 is connected to the outdoor or indoor device itself.

Fig. 8 is a diagram of one example of a communication control frame 140 for the outdoor and indoor devices.

The communication control frame 140 has a header 141 and a payload 142. The header 141 has a destination address 143 as 143, a self-address 144, a refrigerant system number 145, a terminator flag 146, and a packet length 147. The payload 142 has a control command or a response 148 to a command, additional data 149, and an error correction code 151.

The terminator 21 is mounted on all outdoor and indoor devices (hereinafter referred to as an "air conditioner"), but connection/non-connection is determined by a mechanical switch such as a dip switch.

Controllers 17, 27 of the air conditioner connected to the terminator 21 by closing of the dip switch can detect closing of the dip switch, and the terminator flag 146 is brought into a terminator flag = 1.

After power distribution, the air conditioner sets the destination address 143 to a destination address = a broadcast address, and sets the command 148 to a command = self-address notification. Then, the air conditioner broadcasts the self-address 144 and the terminator flag 146 to the communication network.

Such a process is sequentially performed, and the air conditioner connected to the terminator 21 sets the terminator flag 146 to the terminator flag = 1 and broadcasts the terminator flag 146.

The broadcast from the air conditioner is received as described above, so that the address of only one air conditioner connected to the terminator 21 can be recognized by the remaining air conditioners.

An air conditioner unable to receive a signal from the air conditioner connected to the terminator 21 due to waveform distortion caused by reflection might be present.

For this reason, after the air conditioner has received a broadcast of the terminator flag = 1, the self-address 144 of the air conditioner having sent such broadcast is stored.

Then, upon broadcasting by such an air conditioner itself, the additional data 149 is sent with the additional data being set to the address of the air conditioner connected to the additional data=the terminator.

Such data is received by each air conditioner, so that all air conditioners can reliably recognize the address of the air conditioner connected to the terminator.

Thereafter, the communication sequence described with reference to Fig. 5 or 7 is performed to sense the presence or absence of zero crossing.

Note that the present embodiments are not limited to the above-described examples. Those skilled in the art can make various additions, changes, and the like within the scope of the present embodiments.

For example, it is configured such that the indoor devices 10a to 10d send the indoor device addresses thereof to the outdoor device upon power distribution, but the addresses may be sent by operation of a user. Moreover, a delay element is not limited to the inductor, and may be any of a delay line, a ferrite bead, a wound coil, or an electric wire or a combination thereof. With this configuration, the reflective wave can be delayed, and normal decoding can be made.

DESCRIPTION OF REFERENCE SIGNS

| | |
|---|---|
| 1, 100: | Air conditioning system |
| 10a, 10b, 10c, 10d, 10e, 10f, 10g, 10h, 10i: | Indoor device |
| 20, 20a, 20b: | Outdoor device |
| 31, 32: | Two-core communication cable |
| 11, 12: | Inductor |
| 18a, 18b: | Communication cable terminal |
| 13a, 13b, 13c: | Transmission path switch |
| 19a, 19b: | Communication cable terminal |
| 14a, 14b, 14c: | Transmission path switch |
| 15, 25: | Sending circuit |
| 16, 26: | Receiving circuit |
| 17,27: | Controller |
| 22, 23: | Communication cable terminal |
| 21: | Terminator |

## Claims

1. An air conditioning system including an air conditioner configured such that an outdoor device having an outdoor controller and multiple indoor devices having indoor controllers are connected to each other via a transmission line and operation control is performed by serial data communication via the transmission line, wherein

any one of the outdoor device and the multiple indoor devices has a terminator configured to perform impedance termination for the transmission line,
each indoor device includes

a first transmission line terminal connected to the transmission line connected to other ones of the indoor devices or the outdoor device,
a second transmission line terminal connected to the transmission line connected to still other ones of the indoor devices,
a first transmission path switch connected to the first transmission line terminal,
a second transmission path switch connected to the second transmission line terminal, and
a delay element connected to between the first transmission path switch and the second transmission path switch,

each indoor controller switches the first transmission path switch and the second transmission path switch between an initial state in which the first transmission line terminal and the second transmission line terminal are short-circuited and a state in which the first transmission line terminal and the second transmission line terminal are connected to each other via the delay element.

2. The air conditioning system according to claim 1, wherein
the terminator is provided at the outdoor device.

3. The air conditioning system according to claim 1 or 2, wherein
the delay element is any of an inductor, a delay line, a ferrite bead, a wound coil, or an electric wire or a combination thereof.

4. The air conditioning system according to any one of claims 1 to 3, wherein an inductance value Lsht of the delay element is set to

$$\mathrm{Lsht} = 1/(4 \times \mathrm{Fdt}) \times \mathrm{Ltm}$$

where a signal frequency of the serial data communication is Fdt [kHz], and
an inductance value for a delay by unit time is Ltm [$\mu$H/$\mu$sec].

5. The air conditioning system according to any one of claims 1 to 4, wherein
the indoor controller of each indoor device sends an identification code of each indoor device to the outdoor device after power distribution,
the outdoor controller of the outdoor device sends a response to the each indoor device,
in a case where the response has been received, the indoor controller of each indoor device sends reception completion to the outdoor device, and
in a case where the response cannot be received, the indoor controller of each indoor device switches the first transmission path switch and the second transmission path switch from the initial state, thereby bringing a state in which the first transmission line terminal and the second transmission line terminal are connected to each other via the delay element.

6. The air conditioning system according to claim 1 or 3, wherein
the outdoor device includes multiple outdoor devices connected to the transmission line, and the terminator is connected to any one of the multiple outdoor devices and the multiple indoor devices,

7. The air conditioning system according to claim 6, wherein
the terminator is connected to any one of the multiple outdoor devices,
the indoor controller of each indoor device sends, after power distribution, an identification code and a refrigerant system identification code of each indoor device to the outdoor device having the terminator,
the outdoor controller of the outdoor device having the terminator sends a response to each indoor device,
in a case where the response has been received, the indoor controller of each indoor device sends reception completion to the outdoor device having the terminator,
in a case where the response cannot be received, the indoor controller of each indoor device switches the first transmission path switch and the second transmission path switch from the initial state, thereby bringing a state in which the first transmission line terminal and the second transmission line terminal are connected to each other via the delay element, and in a case where another response has been received from the outdoor device, the indoor controller of each indoor device sends reception completion to the outdoor device having the terminator, and after having received the reception completion from each indoor device, the outdoor device having the terminator sends, to other ones of the multiple outdoor devices, the refrigerant system identification code and the identification code of each indoor device.

8. The air conditioning system according to claim 1, wherein
the outdoor controller of the outdoor device and the indoor controller of each indoor device sense a presence or absence of connection of the terminator to the controllers themselves, and in a case where the terminator is connected to one of the controllers, a terminator flag is set to broadcast the terminator flag and an identification code of the one of the controllers,
the remaining outdoor and indoor controllers of the outdoor and indoor devices having received the identification code store the identification code, and
the indoor controller of each indoor device having received the identification code sends an identification code thereof with the stored identification code.

9. The air conditioning system according to claim 6, wherein
the outdoor controllers of the outdoor devices and the indoor controllers of the indoor devices sense a presence or absence of connection of the terminator to the controllers themselves, and in a case where the terminator is connected to one of the controllers, a terminator flag is set to broadcast the terminator flag and an identification code of the one of the controllers,
the remaining outdoor and indoor controllers of the outdoor and indoor devices having received the identification code store the identification code, and
the indoor controller of each indoor device having received the identification code sends an identification code thereof with the stored identification code.

**Amended claims under Art. 19.1 PCT**

**1.** An air conditioning system including an air conditioner configured such that an outdoor device having an outdoor controller and multiple indoor devices having indoor controllers are connected to each other via a transmission line and operation control is performed by serial data communication via the transmission line, wherein

any one of the outdoor device and the multiple indoor devices has a terminator configured to perform impedance termination for the transmission line,
each indoor device includes

a first transmission line terminal connected to the transmission line connected to other ones of the indoor devices or the outdoor device,
a second transmission line terminal connected to the transmission line connected to still other ones of the indoor devices,
a first transmission path switch connected to the first transmission line terminal,
a second transmission path switch connected to the second transmission line terminal, and
a delay element connected to between the first transmission path switch and the second transmission path switch,

each indoor controller switches the first transmission path switch and the second transmission path switch between an initial state in which the first transmission line terminal and the second transmission line terminal are short-circuited and a state in which the first transmission line terminal and the second transmission line terminal are connected to each other via the delay element, and
an inductance value Lsht of the delay element is set to

$$\mathrm{Lsht} = 1/(4 \times \mathrm{Fdt}) \times \mathrm{Ltm}$$

where a signal frequency of the serial data communication is Fdt [kHz], and an inductance value for a delay by unit time is Ltm [$\mu$H/$\mu$sec].

**2.** The air conditioning system according to claim 1, wherein
the terminator is provided at the outdoor device.

**3.** The air conditioning system according to claim 1 or 2, wherein
the delay element is any of an inductor, a delay line, a ferrite bead, a wound coil, or an electric wire or a combination thereof.

**5.** An air conditioning system including an air conditioner configured such that an outdoor device having an outdoor controller and multiple indoor devices having indoor controllers are connected to each other via a transmission line and operation control is performed by serial data communication via the transmission line, wherein

any one of the outdoor device and the multiple indoor devices has a terminator configured to perform impedance termination for the transmission line,
each indoor device includes

a first transmission line terminal connected to the transmission line connected to other ones of the indoor devices or the outdoor device,
a second transmission line terminal connected to the transmission line connected to still other ones of the indoor devices,
a first transmission path switch connected to the first transmission line terminal,
a second transmission path switch connected to the second transmission line terminal, and
a delay element connected to between the first transmission path switch and the second transmission path switch,

each indoor controller switches the first transmission path switch and the second transmission path switch between an initial state in which the first transmission line terminal and the second transmission line terminal are short-circuited and a state in which the first transmission line terminal and the second transmission line terminal are connected to each other via the delay element,
the indoor controller of each indoor device sends an identification code of each indoor device to the outdoor device after power distribution,
the outdoor controller of the outdoor device sends a response to the each indoor device,
in a case where the response has been received, the indoor controller of each indoor device sends reception completion to the outdoor device, and
in a case where the response cannot be received, the indoor controller of each indoor device switches the first transmission path switch and the second transmission path switch from the initial state, thereby bringing a state in which the first transmission line terminal and the second transmission line terminal are connected to each other via the delay element.

**6.** (Deleted)

**7.** (Amended) An air conditioning system including an air conditioner configured such that an outdoor device having an outdoor controller and multiple indoor devices having indoor controllers are connected to each other via a transmission line and operation control is performed by serial data communication via the transmission line, wherein

any one of the outdoor device and the multiple indoor devices has a terminator configured to perform impedance termination for the transmission line,
each indoor device includes

a first transmission line terminal connected to the transmission line connected to other ones of the indoor devices or the outdoor device,
a second transmission line terminal connected to the transmission line connected to still other ones of the indoor devices,
a first transmission path switch connected to the first transmission line terminal,
a second transmission path switch connected to the second transmission line terminal, and
a delay element connected to between the first transmission path switch and the second transmission path switch,

each indoor controller switches the first transmission path switch and the second transmission path switch between an initial state in which the first transmission line terminal and the second transmission line terminal are short-circuited and a state in which the first transmission line terminal and the second transmission line terminal are connected to each other via the delay element,

the outdoor device includes multiple outdoor devices connected to the transmission line, and the terminator is connected to any one of the multiple outdoor devices and the multiple indoor devices,

the terminator is connected to any one of the multiple outdoor devices,

the indoor controller of each indoor device sends, after power distribution, an identification code and a refrigerant system identification code of each indoor device to the outdoor device having the terminator,

the outdoor controller of the outdoor device having the terminator sends a response to each indoor device,

in a case where the response has been received, the indoor controller of each indoor device sends reception completion to the outdoor device having the terminator,

in a case where the response cannot be received, the indoor controller of each indoor device switches the first transmission path switch and the second transmission path switch from the initial state, thereby bringing a state in which the first transmission line terminal and the second transmission line terminal are connected to each other via the delay element, and in a case where another response has been received from the outdoor device, the indoor controller of each indoor device sends reception completion to the outdoor device having the terminator, and

after having received the reception completion from each indoor device, the outdoor device having the terminator sends, to other ones of the multiple outdoor devices, the refrigerant system identification code and the identification code of each indoor device.

8. (Amended) An air conditioning system including an air conditioner configured such that an outdoor device having an outdoor controller and multiple indoor devices having indoor controllers are connected to each other via a transmission line and operation control is performed by serial data communication via the transmission line, wherein

any one of the outdoor device and the multiple indoor devices has a terminator configured to perform impedance termination for the transmission line,

each indoor device includes

a first transmission line terminal connected to the transmission line connected to other ones of the indoor devices or the outdoor device,

a second transmission line terminal connected to the transmission line connected to still other ones of the indoor devices,

a first transmission path switch connected to the first transmission line terminal,

a second transmission path switch connected to the second transmission line terminal, and

a delay element connected to between the first transmission path switch and the second transmission path switch,

each indoor controller switches the first transmission path switch and the second transmission path switch between an initial state in which the first transmission line terminal and the second transmission line terminal are short-circuited and a state in which the first transmission line terminal and the second transmission line terminal are connected to each other via the delay element,

the outdoor controller of the outdoor device and the indoor controller of each indoor device sense a presence or absence of connection of the terminator to the controllers themselves, and in a case where the terminator is connected to one of the controllers, a terminator flag is set to broadcast the terminator flag and an identification code of the one of the controllers,

the remaining outdoor and indoor controllers of the outdoor and indoor devices having received the identification code store the identification code, and

the indoor controller of each indoor device having received the identification code sends an identification code thereof with the stored identification code.

9. (Amended) An air conditioning system including an air conditioner configured such that an outdoor device having an outdoor controller and multiple indoor devices having indoor controllers are connected to each other via a transmission line and operation control is performed by serial data communication via the transmission line, wherein

any one of the outdoor device and the multiple indoor devices has a terminator configured to perform impedance termination for the transmission line,

each indoor device includes

a first transmission line terminal connected to the transmission line connected to other ones of the indoor devices or the outdoor device,
a second transmission line terminal connected to the transmission line connected to still other ones of the indoor devices,
a first transmission path switch connected to the first transmission line terminal,
a second transmission path switch connected to the second transmission line terminal, and
a delay element connected to between the first transmission path switch and the second transmission path switch,

each indoor controller switches the first transmission path switch and the second transmission path switch between an initial state in which the first transmission line terminal and the second transmission line terminal are short-circuited and a state in which the first transmission line terminal and the second transmission line terminal are connected to each other via the delay element,
the outdoor device includes multiple outdoor devices connected to the transmission line, and the terminator is connected to any one of the multiple outdoor devices and the multiple indoor devices,
the outdoor controllers of the outdoor devices and the indoor controllers of the indoor devices sense a presence or absence of connection of the terminator to the controllers themselves, and in a case where the terminator is connected to one of the controllers, a terminator flag is set to broadcast the terminator flag and an identification code of the one of the controllers,
the remaining outdoor and indoor controllers of the outdoor and indoor devices having received the identification code store the identification code, and
the indoor controller of each indoor device having received the identification code sends an identification code thereof with the stored identification code.

**10.** (Added) The air conditioning system according to any one of claims 1, 5, 8, and 9, wherein
the terminator is provided at the outdoor device.

**11.** (Added) The air conditioning system according to any one of claims 1, 5, and 7 to 9, wherein
the delay element is any of an inductor, a delay line, a ferrite bead, a wound coil, or an electric wire or a combination thereof.

FIG. 1

OUTDOOR DEVICE 20

25 21 23 32 32

CONTROLLER SENDING CIRCUIT Rt 31 31 10a 32 31

RECEIVING CIRCUIT 22

27 26

INDOOR DEVICE 10b

18a 18b 19a 19b

13a 13b 14a 14b

11 12

13c 14c

15 SENDING CIRCUIT 16 RECEIVING CIRCUIT

17

CONTROLLER

INDOOR DEVICE 10c

INDOOR DEVICE 10d

16 RECEIVING CIRCUIT

CONTROLLER

15 SENDING CIRCUIT 17

FIG. 2

1

30(31,32)

OUT 21 IN IN IN IN

TERMINATOR 10b 10a 10c 10d

20

REFLECTION OCCURRED

OUT : OUTDOOR DEVICE

IN : INDOOR DEVICE

14

FIG. 3

FIG. 4

FIG. 5

FIG. 6

FIG. 7

| INDOOR DEVICE 10g | OUTDOOR DEVICE 20b | OUTDOOR DEVICE 20a | INDOOR DEVICE 10a | ... | INDOOR DEVICE 10c |

POWER DISTRIBUTION

WAIT FOR RECEPTION COMPLETION FROM INDOOR DEVICE FOR CERTAIN TIME

INDOOR DEVICE ADDRESS, REFRIGERANT SYSTEM NUMBER S121

POWER DISTRIBUTION

POWER DISTRIBUTION

RESPONSE S122

S123 RECEPTION COMPLETION

INDOOR DEVICE ADDRESS, REFRIGERANT SYSTEM NUMBER S124

S125 RESPONSE

RECEPTION COMPLETION S126

INDOOR DEVICE ADDRESS, REFRIGERANT SYSTEM NUMBER S127

RESPONSE S128

TIME OUT, RECOGNIZE AS ZERO CROSSING NODE

INSERT INDUCTORS

INDOOR DEVICE ADDRESS, REFRIGERANT SYSTEM NUMBER S132

RESPONSE S133

NORMAL RECEPTION

COMPLETE CHECKING FOR RECEPTION BY ALL INDOOR DEVICES

RECEPTION COMPLETION S134

COMMUNICATION SETTING COMPLETION S135

OUTDOOR DEVICE RESPONSE S136

CONSTRUCTION SETTING MODE

NORMAL MODE

FIG. 8

140

141 HEADER

142 PAYLOAD

| 143 DESTINATION ADDRESS | 144 SELF-ADDRESS | 145 REFRIGERANT SYSTEM NUMBER | 146 TERMINATOR FLAG | 147 PACKET LENGTH | 148 COMMAND/RESPONSE | 149 ADDITIONAL DATA | 151 ERROR CORRECTION CODE |

## INTERNATIONAL SEARCH REPORT

| | International application No. |
|---|---|
| | PCT/JP2018/017938 |

A. CLASSIFICATION OF SUBJECT MATTER
Int. Cl. H04L25/02(2006.01)i, F24F11/88(2018.01)i

According to International Patent Classification (IPC) or to both national classification and IPC

B. FIELDS SEARCHED

Minimum documentation searched (classification system followed by classification symbols)
Int. Cl. H04L25/02, F24F11/88

Documentation searched other than minimum documentation to the extent that such documents are included in the fields searched
Published examined utility model applications of Japan        1922-1996
Published unexamined utility model applications of Japan      1971-2018
Registered utility model specifications of Japan              1996-2018
Published registered utility model applications of Japan      1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2011-223243 A (YOKOGAWA ELECTRIC CORP.) 04 | 1-3, 6 |
| A | November 2011, paragraphs [0011]-[0039], fig. 1-3 (Family: none) | 4-5, 7-9 |
| Y | JP 2009-44285 A (FUNAI ELECTRIC CO., LTD.) 26 | 1-3, 6 |
| A | February 2009, paragraphs [0019]-[0027], fig. 1, 2 (Family: none) | 4-5, 7-9 |
| Y | JP 2011-145014 A (MITSUBISHI ELECTRIC CORP.) 28 | 1-3, 6 |
| A | July 2011, paragraphs [0011]-[0052], fig. 1-9 (Family: none) | 4-5, 7-9 |
| A | JP 2001-50574 A (MATSUSHITA REFRIGERATION CO.) 23 February 2001 (Family: none) | 1-9 |

☐ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12.07.2018 | 07.08.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2018/017938

A. CLASSIFICATION OF SUBJECT MATTER
Int. Cl. H04L25/02(2006.01)i, F24F11/88(2018.01)i

According to International Patent Classification (IPC) or to both national classification and IPC

B. FIELDS SEARCHED

Minimum documentation searched (classification system followed by classification symbols)
Int. Cl. H04L25/02, F24F11/88

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2011-223243 A (YOKOGAWA ELECTRIC CORP.) 04 November 2011, paragraphs [0011]-[0039], fig. 1-3 (Family: none) | 1-3, 6<br>4-5, 7-9 |
| Y<br>A | JP 2009-44285 A (FUNAI ELECTRIC CO., LTD.) 26 February 2009, paragraphs [0019]-[0027], fig. 1, 2 (Family: none) | 1-3, 6<br>4-5, 7-9 |
| Y<br>A | JP 2011-145014 A (MITSUBISHI ELECTRIC CORP.) 28 July 2011, paragraphs [0011]-[0052], fig. 1-9 (Family: none) | 1-3, 6<br>4-5, 7-9 |
| A | JP 2001-50574 A (MATSUSHITA REFRIGERATION CO.) 23 February 2001 (Family: none) | 1-9 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12.07.2018 | Date of mailing of the international search report<br>07.08.2018 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**EP 3 793 146 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008054100 A
- JP 6038278 A